# EUROPÄISCHE PATENTANMELDUNG

(11) **EP 0 770 441 A1**
(43) Veröffentlichungstag der Anmeldung: **02.05.1997**
(21) Anmeldenummer: 96113808.8
(22) Anmeldetag: 29.08.1996
(51) Int. Cl.: B23B 31/34

(54) **Spannvorrichtung zur Bearbeitung eines Zapfensterns od.dgl.**

(30) Priorität: 24.10.1995 DE 19539441; 08.11.1995 DE 19541603
(71) Anmelder: Emuge-Werk Richard Glimpel Fabrik für Präzisionswerkzeuge (vormals Moschkau & Glimpel), D-91207 Lauf (DE)
(72) Erfinder: Glimpel, Helmut, Dipl.-Ing., 91207 Lauf (DE)
(74) Vertreter: Matschkur, Götz, Lindner Patent- und Rechtsanwälte

(57) **Zusammenfassung**

Spannvorrichtung zur Bearbeitung eines Zapfenstern-Werkstücks (6) mit mehreren äquidistant winkelversetzten Zapfen, insbesondere für ein homokinetisches Gelenk, wobei an einem Grundkörper (1) ein Spannelementträger (7) axial unverschiebbar rotierend gelagert ist, der mittels einer Antriebsvorrichtung (28,29,30) getaktet um seine zur Achse des Zapfensterns (6) parallele Längsachse von einer Bearbeitungs-Raststellung zur nächsten verdrehbar ist.

## Beschreibung

Die Erfindung bezieht sich auf eine Spannvorrichtung zur Bearbeitung eines Zapfenstern-Werkstücks mit mehreren äquidistant winkelversetzten Zapfen, insbesondere für ein homokinetisches Gelenk.

Bei der Bearbeitung derartiger Zapfensterne muß das Werkstück bislang nach der Bearbeitung eines Zapfens jeweils umgespannt werden, um nach Versetzung um die Winkelteilung der Zapfen den nächsten dieser Zapfen in die Bearbeitungsstellung zu bringen. Dieses Umspannen ist nicht nur äußerst mühsame und zeitaufwendig, sondern beinhaltet auch den Nachteil, daß es dabei schwierig ist, die genaue justierte Zuordnung zu den übrigen Zapfen einzustellen, so daß nach der endgültigen Bearbeitung sich nirgends ein Versatz ergibt.

Der Erfindung liegt daher die Aufgabe zugrunde, eine Spannvorrichtung zur Bearbeitung derartiger Zapfenstern-Werkstücke zu schaffen, bei denen unabhängig von vorhandenen Toleranzfehlern des Rohwerkstücks und ohne mühsames Umspannen eine exakte Positionierung der einzelnen Zapfen so erfolgt, daß nach der Bearbeitung exakt die gewünschte Teilung gewährleistet ist.

Zur Lösung dieser Aufgabe ist erfindungsgemäß vorgesehen, daß an einem Grundkörper ein Spannelementträger axial unverschiebbar rotierend gelagert ist, der mittels einer Antriebsvorrichtung getaktet um seine zur Achse des Zapfensterns parallele Längsachse von einer Bearbeitungs-Raststellung zur nächsten verdrehbar ist.

Durch die erfindungsgemäße Spannvorrichtung ist es lediglich erforderlich, das Werkstück einmal am Spannelementträger des Grundkörpers zu befestigen, um dann durch Weiterverdrehen des Spannelementträgers nach der Bearbeitung eines Zapfens die nächste Bearbeitungsposition zu erreichen, was besonders einfach dadurch erzielbar ist, daß der Spannelementträger Rastausnehmungen für einen federgelagerten Fixierbolzen aufweist, der durch Federn in die Raststellung vorgespannt und durch einen Entspannzylinder in die Lösestellung zurückziehbar ist. Durch Vorsehen eines Fixierbolzens mit einer kegelförmigen Spitze ergibt sich eine exakte Zentrierung der jeweiligen Rastausnehmung und damit eine exakte lagemäßige Positionierung des Spannelementträgers und damit natürlich auch des darauf verspannten Zapfenstern-Werkstücks.

Die Spannvorrichtung kann dabei in Ausgestaltung der Erfindung so ausgebildet sein, daß am einen Ende des Spannelementträgers eine Prismenfixierung befestigt ist, auf der das Werkstück mittels eines Kegelrings und einer in die Bohrung des Werkstücks eingreifenden, gegen dessen Innenfläche verspreizbaren, Kegelspannbuchse befestigbar ist, welche durch einen Spannbolzen gegeneinander verspannbar sind.

Um dabei Radialfehler zwischen den Prismen-Auflagepunkten und der zu spannenden Werkstückbohrung auszugleichen, soll dabei der Spannbolzen bevorzugt den Spannelementträger in einer Längsbohrung mit radialem Spiel durchsetzen und der Kegelring und die Kegelspannbüchse den Spannbolzen lose umfassen. Der Spannbolzen kann also um dieses Spiel radial sich verschieben, derart, daß über den Kegelring und die Kegelspannbüchse das Werkstück in der Prismenfixierung selbsttätig beim Spannen fixiert angeordnet wird.

Mit besonderem Vorteil kann dabei weiter vorgesehen sein, daß der Spannbolzen durch ein am freien unteren Ende angreifendes, im Spannelementträger angeordnetes Federpaket in die Spannstellung vorgespannt und durch ein vorzugsweise als Hydraulik-Entspannzylinder ausgebildetes Entspannglied wieder lösbar ist. Im Hinblick auf die relativ geringen Spannwege derartiger Federpakete bedarf es nur einer geringfügigen Verschiebung durch den Hydraulik-Entspannzylinder, um den Spannbolzen wenige Millimeter axial zu verschieben und dadurch der Kegelspannbüchse die Möglichkeit zu geben, aufgrund ihrer Eigenelastizität sich wieder etwas zusammenzuziehen, so daß das Werkstück bequem nach oben abgenommen werden kann. Diese Art der Spannung bietet ersichtlich auch die einfache Möglichkeit einer automatischen Be- und Entladung der Spannvorrichtung mit den Werkstücken, wozu lediglich ein positionsgenauer Maschinenhalt Voraussetzung ist. Das Werkstück kann mittels Handhabungsgeräten automatsich aufgesetzt und abgenommen werden.

In einer weiteren Ausgestaltung der Erfindung ist vorgesehen, daß die Takt-Antriebsvorrichtung einen Pneumatikzylinder umfaßt, dessen Längsbewegung über eine Zahnstange und ein damit kämmendes Ritzel in eine Drehbewegung umgewandelt wird. Das Vorsehen eines derartigen Antriebs mit einem Pneumatikzylinder hat den Vorteil, daß zur taktgemäßen Verdrehung des Werkstücks lediglich eine Beaufschlagung des Hydraulikzylinders mit Druckluft von der einen und der anderen Seite erforderlich ist, um je nach der gewünschten Drehrichtung das Weitertakten bewerkstelligen zu können. Derartige Pneumatikleitungen lassen sich aber sehr einfach an den Grundkörper der Spannvorrichtung anschließen, selbst wenn dieser Grundkörper rotierend auf einer Bearbeitungsmaschine aufgespannt ist. Alternativ wäre auch ein Hydraulikzylinder denkbar. Wegen der benötigten relativ kleinen Kräfte und der angestrebten hohen Geschwindigkeiten sind aber hier Pneumatikzylinder günstiger.

Bei dieser Art einer Takt-Antriebsvorrichtung hat es sich als zweckmäßig erwiesen, daß das Ritzel auf einer Welle sitzt, auf der ein Zahnriemenrad befestigt ist, das die Drehbewegung über einen Zahnriemen auf den kugelgelagerten Spannelementträger überträgt.

Die Welle kann dabei vorteilhafterweise mit dem Ritzel und dem Zahnriemenrad an den beiden Enden über Lagerkugeln axial unverschiebbar gelagert sein, die jeweils durch Spannschrauben in zur Wellenachse koaxialen Lagerkanälen verstellbar sind.

Eine besonders einfache Ausbildung des Pneumatikkolbens mit Zahnstange zum Antrieb des Ritzels ergibt sich dabei in einer Weiterbildung der Erfindung dadurch, daß der Pneumatikkolben zweigeteilt ist, wobei die Kolbenabschnitte durch die Zahnstange miteinander verbunden sind. Jeweils links vom einen und rechts vom anderen Kolbenabschnitt sind die Antriebskammern im Pneumatikzylinder, in denen durch Einleiten von Druckluft eine Verschiebung des Kolbens möglich ist, so daß linksherum oder auch rechtsherum ein Verdrehen des Spannelementträgers und damit des Werkstücks erfolgen kann.

Schließlich liegt es auch noch im Rahmen der Erfindung, daß die Achse des zu bearbeitenden Zapfens des Werkstücks mit der Rotationsachse des Grundkörpers, der auf einer Bearbeitungsmaschine eingespannt ist, zusammenfällt. Infolge der konstant aufrechterhaltenen Spannkraft für das Spannelement bleibt das Werkstück auch während des Taktvorgangs in der Prismenfixierung gespannt, so daß ein Taktprozeß somit auch während des Maschinenumlaufs erfolgen kann und somit die Bearbeitungsoperation in minimaler Zeit abgewickelt werden kann.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: einen Schnitt durch eine erfindungsgemäße Spannvorrichtung, die auf der linken Seite auf den rotierenden Kopf einer Bearbeitungsmaschine aufgespannt werden kann, um den jeweils rechts zu erkennenden in Arbeitsposition befindlichen Zapfen eines Zapfenstern-Werkstücks bearbeiten zu können,
- Fig. 2: eine Aufsicht auf den Spannelementträger in Richtung des Pfeils II in Fig. 1 bei nicht aufgesetztem Werkstück,
- Fig. 3: eine Ansicht der erfindungsgemäßen Spannvorrichtung in Richtungs des Pfeils III in Fig. 1,
- Fig. 4: einen gestuften Schnitt längs der Linie IV-IV in Fig. 3, und
- Fig. 5 und 6: Aufsichten bzw. Seitenansichten eines Zapfensterns für ein homokinetisches Element, bei welchem in Abwandlung von Fig. 1 die balligen Teile nicht an den Zapfen angeformt sind, sondern erst gesondert auf diese aufgesteckt werden.

Der Grundkörper 1 der erfindungsgemäßen Spannvorrichtung ist bei 2 mit einem Aufspannkegel versehen, mit Hilfe dessen er auf den rotierenden Kopf einer Bearbeitungsmaschine aufgespannt werden kann, so daß er um seine Achse 3 rotieren kann. Diese Achse fällt exakt mit der Achse 4 des jeweils in Spannrichtung befindlichen zu bearbeitenden Zapfens 5 eines Zapfenstern-Werkstücks 6 zusammen, welches mit Hilfe eines Spannelementträgers 7 am Grundkörper befestigbar ist.

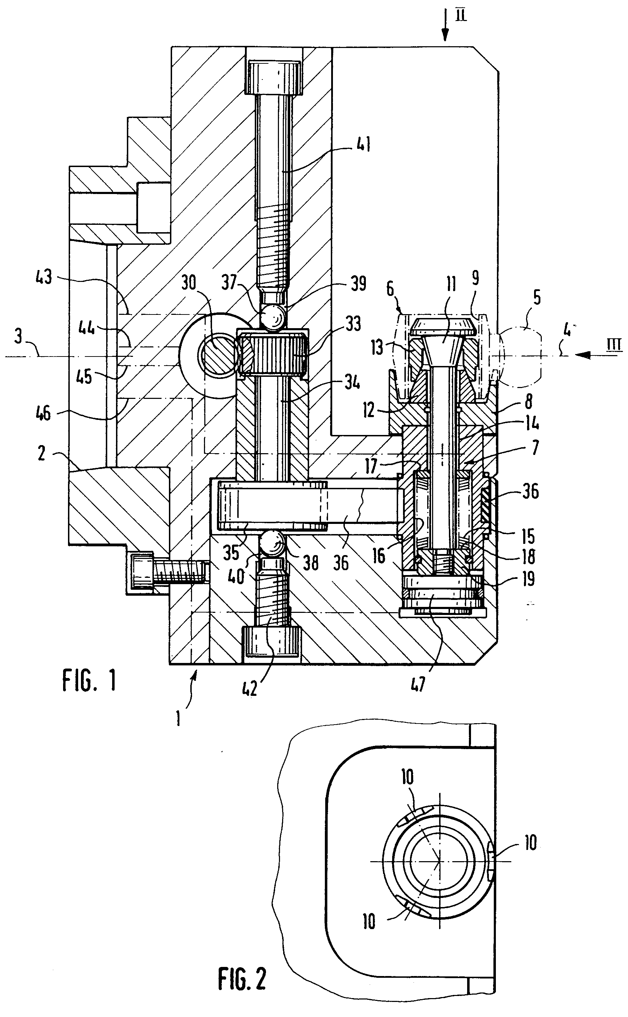

Der Spannelementträger 7, der in Richtung seiner in Fig. 1 vertikal verlaufenden Längsachse unverschiebbar, jedoch um diese Achse drehbar im Grundkörper 1 gelagert ist, trägt eine Prismenfixierung 8 für das Zapfenstern-Werkstück, das eine Werkstückbohrung 9 aufweist. Die Verspannung in den Prismenauflagern 10 erfolgt mittels des Spannbolzens 11, des Kegelrings 12 und der Kegelspannbuchse 13. Alle drei haben einen Außendurchmesser, der kleiner ist als der Innendurchmesser der Werkstückbohrung 9, wobei die mehrfach geschlitzte Kegelspannbuchse durch das Aufspannen auf den Kegelring 12 infolge der axialen Verschiebung des Kopfes des Spannbolzens 11 nach unten aufgeweitet wird und sich so innen an die Wandung der Werkstückbohrung 9 anlegt. Der Spannbolzen 11 durchsetzt den Spannelementträger 7 in einer Bohrung 14, die etwas größer ist als der Außendurchmesser des Spannbolzens, so daß ein Spiel zum Ausgleich von Radialfehlern zwischen den Prismenauflagepunkten und der zu spannenden Werkstückbohrung 9 zur Verfügung steht.

Zur Verspannung des Spannbolzens 11 dient ein Tellerfederpaket 15, das in einer entsprechenden Ausnehmung 16 des Spannelementträgers angeordnet ist und sich einerseits am Boden dieser Ausnehmung 17 und zum anderen an einer Schulter 18 abstützt, die durch eine auf das Ende des Spannbolzens 11 aufgeschraubte Mutter 19 gebildet ist.

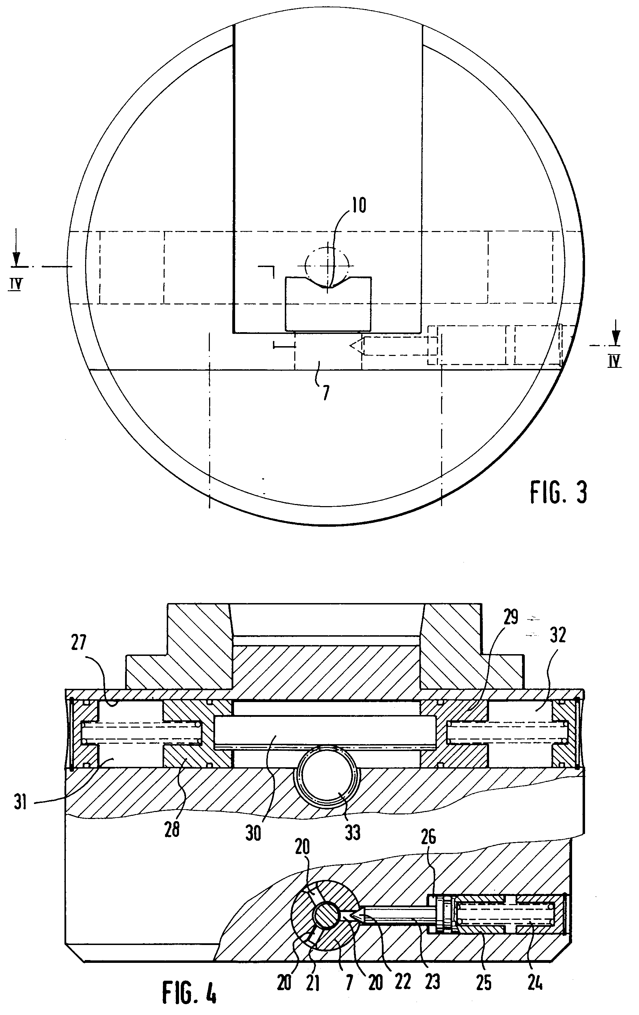

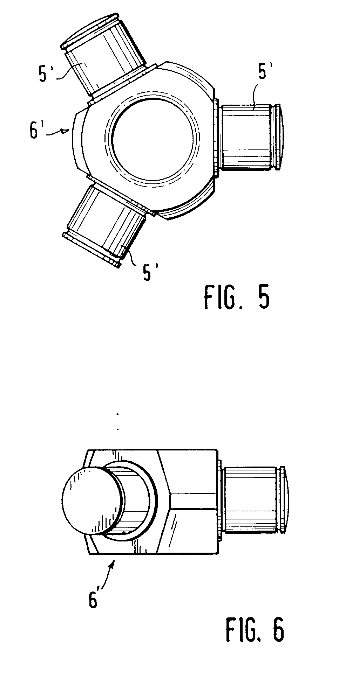

Äquidistant winkelverteilt, entsprechend der Winkelversetzung der Zapfen 5 des Zapfenstern-Werkstücks 6, sind im Spannelementträger 7 (vgl. insbesondere Figuren 3 und 4) Rastausnehmungen 20 vorgesehen, die am äußeren Ende mit einer Kegelphase 21 versehen sind, in welche die kegelförmige Spitze 22 eines Fixierbolzens 23 eingreifen kann. Der Fixierbolzen 23 wird durch eine Spannfeder 24 in die Eingriffsstellung gedrückt. Der Fixierbolzen 23 ist an einem Kolben 25 befestigt, der in einer den Spannzylinder bildenden Bohrung 26 verschiebbar ist. Durch Einleiten von Hydrauliköl vor den Kolben 25 kann dieser entgegen der Wirkung der Feder 24 nach rechts in Fig. 4 verschoben werden, so daß der Fixierbolzen den Spannelementträger 7 freigibt und dieser somit mit Hilfe der nachfolgend noch im einzelnen zu beschreibenden Antriebsvorrichtung zur nächsten winkelmäßig versetzten Arbeitsposition eines Lagerzapfens des Werkstücks 6 weiterverdreht werden kann.

Die Antriebsvorrichtung umfaßt die beiden in einer Pneumatikzylinderbohrung 27 des Grundkörpers verschiebbaren Kolben 28 und 29, die durch eine Zahnstange 30 miteinander verbunden sind. Durch Einleiten von Druckluft (oder ggf. Hydrauliköl) in die linke Kamer 31 oder die rechte Kammer 32 erfolgt eine Verschiebung der Kolben nach rechts oder links und damit über die Zahnstange 30 eine Verdrehung des mit dieser kämmenden Ritzels 33. Das Ritzel 33 sitzt oben auf einer Welle 34, auf deren unterem Ende ein Zahnriemenrad 35 sitzt, welches mit dem Ritzel gemeinsam verdreht wird, so daß über einen Zahnriemen 36 die so aus der linearen Bewegung der Kolben 28, 29 umgewandelte Drehbewegung auf den Spannelementträger 7 übertragen wird. Die axiale Festlegung und Drehlagerung der Welle 34 mit dem Ritzel 33 und dem Zahnriemenrad 35 erfolgt durch Lagerkugeln 37 und 38, die in zur Achse der Welle 34 koaxialen Lagerkanälen 39, 40 des Grundkörpers 1 mit Hilfe von Spannschrauben 41, 42 verstellbar sind.

Es versteht sich von selbst, daß vor jedem Taktprozeß der Fixierbolzen 23 über den integrierten hydraulischen Fixierbolzen-Entspannzylinder 26 gelöst wird. Der Hydraulikdruck wird erst dann abgeschaltet, wenn über die Pneumatik die Kolben 28, 29 entsprechend verschoben und die Verdrehbewegung des Spannelementträgers bewerkstelligt worden ist. Bei abgeschaltetem Hydraulikdruck rastet dann der Fixierbolzen 23 federbelastet wieder in die neue Pol-Position ein.

Lediglich angedeutet erkennt man bei 43 die Achse des im einzelnen nicht gezeichneten Hydraulikanschlusses für den Fixierstift, bei 44 die Achse für den Pneumatikanschluß Linksdrehung, bei 45 den Pneumatikanschluß für die Rechtsdrehung und bei 46 die Achse des Hydraulikanschlusses für den Entspannkolben 47 am unteren Ende des Spannstifts 11, mit Hilfe dessen die Spannwirkung des Tellerfederpakets 15 aufgehoben werden kann, so daß das Werkstück 6 nach oben abgenommen bzw. ein neues Werkstück von oben aufgesetzt werden kann.

Die Figuren 5 und 6 zeigen ein abgewandeltes Zapfenstern-Werkstück 6', bei dem die Zapfen 5' jeweils zylindrische Zapfen sind, auf welche noch nachträglich ein balliges Lagerteil zur Ausbildung beispielsweise eines homokinetischen Gelenks für eine Fahrzeuglenkung aufgesetzt werden kann. Auch bei dieser abgewandelten Form ergibt sich in gleicher Weise die Notwendigkeit einer exakten Bearbeitung der einzelnen Zapfen 5' derart, daß nach der Bearbeitung diese exakt um den gewünschten (hier 120° betragenden) Winkel versetzt sind und auch die Achsen exakt um diese 120° versetzt sind.

Die Erfindung ist nicht auf das dargestellte Ausführungsbeispiel beschränkt. So wäre es selbstverständlich auch möglich, Zapfensterne mit anderer Teilung als der gezeigten 120°-Teilung mit Hilfe einer stets in Spannstellung bleibenden Halterung zu bearbeiten, wobei in diesem Fall dann selbstverständlich der Antrieb und die Arretierung über den Fixierbolzen entsprechend der anderen Teilung abzuändern wäre.

## Patentansprüche

1. Spannvorrichtung zur Bearbeitung eines Zapfenstern-Werkstücks mit mehreren äquidistant winkelversetzten Zapfen, insbesondere für ein homokinetisches Gelenk, dadurch gekennzeichnet, daß an einem Grundkörper (1) ein Spannelementträger (7) axial unverschiebbar rotierend gelagert ist, der mittels einer Antriebsvorrichtung getaktet um seine zur Achse des Zapfensterns (6) parallele Längsachse von einer Bearbeitungs-Raststellung zur nächsten verdrehbar ist.

2. Spannvorrichtung nach Anspruch 1, dadurch gekennzeichnet, daß am einen Ende des Spannelementträgers (7) eine Prismenfixierung (8) befestigt ist, auf der das Werkstück (6) mittels eines Kegelrings (12) und einer in die Bohrung (9) des Werkstücks (6) eingreifenden, gegen dessen Innenfläche verspreizbaren, Kegelspannbuchse (13) befestigbar ist, welche durch einen Spannbolzen (11) gegeneinander verspannbar sind.

3. Spannvorrichtung nach Anspruch 2, dadurch gekennzeichnet, daß der Spannbolzen (11) den Spannelementträger (7) in einer Längsbohrung (14) mit radialem Spiel durchsetzt und der Kegelring (12) und die Kegelspannbüchse (13) den Spannbolzen (11) lose umfassen.

4. Spannvorrichtung nach Anspruch 2 oder 3, dadurch gekennzeichnet, daß der Spannbolzen (11) durch ein am freien unteren Ende angreifendes, im Spannelementträger (7) angeordnetes Federpaket (15) in die Spannstellung vorgespannt und durch ein vorzugsweise als Hydraulik-Entspannzylinder (47) ausgebildetes Entspannglied lösbar ist.

5. Spannvorrichtung nach einem der Ansprüche 1 bis 4, dadurch gekennzeichnet, daß der Spannelementträger (7) Rastausnehmungen (20) für einen Fixierbolzen (23) aufweist, der durch Federn (24) in die Raststellung vorgespannt und durch einen zweiten, vorzugsweise hydraulischen, Entspannzylinder (26) in die Lösestellung zurückziehbar ist.

6. Spannvorrichtung nach einem der Ansprüche 1 bis 5, dadurch gekennzeichnet, daß die Takt-Antriebsvorrichtung einen Pneumatikkolben (28, 29) umfaßt, dessen Längsbewegung über eine Zahnstange (30) und ein damit kämmendes Ritzel (33) in eine Drehbewegung umgewandelt wird.

7. Spannvorrichtung nach Anspruch 6, dadurch gekennzeichnet, daß das Ritzel (33) auf einer Welle (34) sitzt, auf der ein Zahnriemenrad (35) befestigt ist, das die Drehbewegung über einen Zahnriemen (36) auf den kugelgelagerten Spannelementträger (7) überträgt.

8. Spannvorrichtung nach Anspruch 7, dadurch gekennzeichnet, daß die Welle (34) mit dem Ritzel (33) und dem Zahnriemenrad an den beiden Enden über durch Spannschrauben (41, 42) in zur Wellenachse koaxialen Lagerkanälen (39, 40) verstellbare Lagerkugeln (37, 38) axial unverschiebbar gelagert ist.

9. Spannvorrichtung nach einem der Ansprüche 6 bis 8, dadurch gekennzeichnet, daß der Pneumatikkolben zweigeteilt ist, wobei die Kolbenabschnitte (28, 29) durch die Zahnstange (30) miteinander verbunden sind.

10. Spannvorrichtung nach einem der Ansprüche 1 bis 9, dadurch gekennzeichnet, daß die Achse (4) des zu bearbeitenden Zapfens (5) des Werkstücks (6) mit der Rotationsachse (3) des Grundkörpers (1), der auf einer Bearbeitungsmaschine eingespannt ist, zusammenfällt.
